# EUROPÄISCHE PATENTSCHRIFT

(11) **EP 3 135 370 B1**
(45) Veröffentlichungstag und Bekanntmachung des Hinweises auf die Patenterteilung: **30.09.2020**
(21) Anmeldenummer: 16400030.9
(22) Anmeldetag: 25.07.2016
(51) Int. Cl.: B01J 8/06

(54) **REAKTOR ZUR ERZEUGUNG VON SYNTHESEGAS DURCH DAMPFREFORMIERUNG**
REACTOR FOR THE PRODUCTION OF SYNTHESIS GAS BY STEAM REFORMING
REACTEUR DESTINE A PRODUIRE DU GAZ DE SYNTHESE PAR REFORMAGE A LA VAPEUR

(30) Priorität: 24.08.2015 FR 1557876; 14.06.2016 EP 16400020
(43) Veröffentlichungstag der Anmeldung: 01.03.2017
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Schlichting, Holger, 65719 Hofheim (DE); Basin, Marie, 78000 Versailles (FR); Doublet, Sébastien, 91430 Vauhallan (FR)
(74) Vertreter: Dropsch, Holger

(56) Entgegenhaltungen:
- WO-A1-2011/121433
- WO-A1-2013/068416
- US-A1- 2004 144 029
- US-A1- 2005 069 737
- US-B1- 6 221 117

## Beschreibung

### Gebiet der Erfindung

Die Erfindung betrifft einen Reaktor zur Dampfreformierung von kohlenwasserstoffhaltigem Gas zu Synthesegas, umfassend
- einen Reaktormantel
- Zuführungsrohrleitungen für kohlenwasserstoffhaltiges Gas und für Dampf,
- Abführungsrohrleitungen für Synthesegas und für Rauchgas,
- Mittel zur Bereitstellung der für die Dampfreformierung erforderlichen Wärmeenergie
- Mittel zur Aufnahme der Reaktionszone der Dampfreformierungsreaktionen, wobei in der Reaktionszone ein für die Dampfreformierungsreaktionen aktiver Katalysator angeordnet ist, und wobei das Mittel so gestaltet und relativ zu dem vorgenannten Mittel angeordnet ist, dass die erforderliche Wärmeenergie für die Dampfreformierungsreaktionen durch indirekte Wärmeübertragung auf dieses Mittel übertragen werden kann,
- Mittel zur Aufnahme der Reaktionszone der Wassergas-Shift-Reaktion im Synthesegas in dem dafür aktiver Katalysator angeordnet ist, wobei dieses Mittel so gestaltet und angeordnet ist, dass zwischen den Reaktionszonen der Dampfreformierungsreaktionen und der Wassergas-Shift-Reaktion ein indirekter Wärmeaustausch erfolgen kann.

Die Erfindung betrifft weiterhin ein Verfahren zur Dampfreformierung.

### Stand der Technik

Kohlenwasserstoffe können mit Dampf katalytisch zu Synthesegas, also Mischungen von Wasserstoff (H₂) und Kohlenmonoxid (CO), umgesetzt werden. Wie in Ullmann's Encyclopedia of Industrial Chemistry, Sixth Edition, 1998 Electronic Release, Stichwort "Gas Production", ausgeführt wird, ist diese sogenannte Dampfreformierung (steam reforming) die meist angewandte Methode für die Produktion von Synthesegas, welches nachfolgend zu weiteren bedeutenden Grundchemikalien wie Methanol oder Ammoniak umgesetzt werden kann. Zwar können unterschiedliche Kohlenwasserstoffe, wie beispielweise Naphtha, Flüssiggas oder Raffineriegase umgesetzt werden, jedoch ist die Dampfreformierung von methanhaltigem Erdgas dominierend.

Die Dampfreformierung von Erdgas verläuft stark endotherm. Sie wird häufig in einem Reformerofen durchgeführt, in dem zahlreiche, Katalysator enthaltende Reformerrohre parallel angeordnet sind, in denen die Dampfreformierungsreaktion abläuft. Die Außenwände des Reaktors sowie seine Decke und sein Boden sind dabei mit mehreren Schichten aus feuerfestem Material ausgekleidet oder zugestellt, das Temperaturen bis zu 1200 °C standhält. Die Reformerrohre werden zumeist mittels Brennern befeuert, die an der Oberseite oder Unterseite oder an den Seitenwänden des Reformerofens angebracht sind und direkt den Zwischenraum zwischen den Reformerrohren befeuern. Dabei erfolgt der Wärmeübergang auf die Reformerrohre durch Wärmestrahlung und konvektive Wärmeübertragung von den heißen Rauchgasen.

Nach Vorerhitzung durch Wärmetauscher oder befeuerte Heizer auf ca. 500 °C tritt das Kohlenwasserstoff-Dampf-Gemisch nach Enderhitzung auf ca. 500 bis 700 °C in die Reformerrohre ein und wird dort am Reformierungskatalysator zu Kohlenmonoxid und Wasserstoff umgesetzt. Verbreitet sind Reformierungskatalysatoren auf Nickelbasis. Das Produktgas enthält aber neben Kohlenmonoxid und Wasserstoff auch noch Kohlendioxid, nicht umgesetztes Methan sowie Wasserdampf.

Die Dampfreformierung von Erdgas zeichnet sich durch ihren hohen Energiebedarf aus. Im Stand der Technik finden sich daher bereits Vorschläge, bei denen durch optimierte Verfahrensgestaltung, beispielsweise durch Energierückgewinnung, versucht werden soll, den Bedarf an Fremdenergie zu minimieren. So wurde von Higman bei der EUROGAS-90-Konferenz, Trondheim, Juni 1990, veröffentlicht auch unter http://www.higman.de/gasification/papers/eurogas.pdf (Abruf am 27.09.2011), ein sogenanntes HCT-Reformerrohr mit internem Wärmeaustausch vorgestellt. Dieses umfasst ein äußeres, mit Katalysator gefülltes und von außen beheiztes Reformerrohr, bei dem das Katalysatorbett von dem Einsatzgas von oben nach unten durchströmt wird. Im Inneren des Katalysatorbettes befinden sich zwei gewendelte, als Doppelhelix angeordnete Wärmetauscherrohre aus einem geeigneten Material, durch die das teilreformierte Gas nach Verlassen des Katalysatorbettes strömt und dabei einen Teil seiner fühlbaren Wärme an den am Katalysator ablaufenden Dampfreformierungsprozess abgibt. Berechnungen und Betriebsversuche haben gezeigt, dass bei einer typischen Eintrittstemperatur von 550 °C in das Katalysatorbett und bei einer typischen Austrittstemperatur von 860 °C aus dem Katalysatorbett bis zu 20 % der für die Dampfspaltung benötigten Energie durch den internen Wärmeaustausch zu der Dampfreformierung zurückgeführt werden können. Ferner werden bis zu 15 % Investitionskosten eingespart, da die Konvektionsstrecke im Reformerofen kleiner gestaltet werden kann und weniger Reformerrohre benötigt werden. Allerdings macht sich innerhalb dieser Wärmetauscherrohre die sogenannte "metal dusting"-Korrosion stärker bemerkbar, die nachfolgend erläutert wird, da längere Abschnitte der Wärmetauscherrohre dem für die "metal dusting"-Korrosion relevanten Temperaturbereich ausgesetzt sind.

Die Anmeldeschrift US 2004/0144029 A1 zeigt einen zylinderförmigen Dampfreformer zur Erzeugung eines hauptsächlich aus Wasserstoff bestehenden Synthesegases. Der Reformer ist aus mehreren ineinandergeschobenen, koaxial zu einem zentralen Brenner angeordneten Zylindermänteln aufgebaut. Die von den Zylindermänteln gebildeten Zwischenräume sind mit geeignetem Katalysatormaterial gefüllt und bilden jeweils die Reaktionszone für die Dampfreformierungs- und die Wassergas-Shift-Reaktion. Das Gas wird dabei erst durch den innersten, der Brennerflamme nächstgelegenen Reaktionsraum, zur Durchführung der Reformierungsreaktion, geführt, dann umgelenkt und durch den äußeren Zwischenraum, zur Durchführung der Wassergas-Shift-Reaktion, in entgegen gesetzter Richtung, zurückgeführt. Durch den die Reaktionsräume trennenden Zylindermantel hindurch kommt es dabei zu einem indirektem Wärmeaustausch zwischen den Reaktionsräumen.

Bei vielen Synthesegaserzeugungsanlagen treten bei höheren Gastemperaturen, insbesondere im Bereich von 820° C bis hinunter zu 520° C in den Gaserzeugungsanlagen selbst und in den diesen nachgeschalteten Wärmetauschern Korrosionsprobleme an den verwendeten metallischen Werkstoffen auf, wenn ein gewisses CO₂/CO/H₂O-Verhältnis und eine erhöhte Kohlenstoffaktivität im Synthesegas erreicht wird. Dies gilt sowohl für ferritische als auch für austenitische Stähle. Diese unter dem Begriff "metal dusting" bekannte Materialabtragung führt zu einer Aufzehrung bzw. Zerstörung des Materials und es bestehen nur beschränkte Möglichkeiten, über Materialzusammensetzung dieser Korrosion zu widerstehen.

### Beschreibung der Erfindung

Die Aufgabe der vorliegenden Erfindung besteht daher darin, einen Reaktor anzugeben, der weiter verbesserte Eigenschaften bezüglich der Energierückgewinnung mittels internen Wärmeaustauschs aufweist und bei dem die Gefährdung durch metal-dusting-Korrosion verringert ist.

Die vorstehend genannte Aufgabe wird von einem Reaktor gemäß Anspruch 1 gelöst.

### Erfindungsgemäßer Reaktor:

Reaktor zur Dampfreformierung von kohlenwasserstoffhaltigem Gas zu Synthesegas, umfassend
a) einen Reaktormantel,
b) Zuführungsrohrleitungen für kohlenwasserstoffhaltiges Gas und für Dampf,
c) Abführungsrohrleitungen für Synthesegas und für Rauchgas,
d) Mittel zur Bereitstellung der für die Dampfreformierung erforderlichen Wärmeenergie,
e) Mittel zur Aufnahme der Reaktionszone der Dampfreformierungsreaktionen, wobei in der Reaktionszone ein für die Dampfreformierungsreaktionen aktiver Katalysator angeordnet ist, und wobei das Mittel so gestaltet und relativ zu dem unter d) aufgeführten Mittel angeordnet ist, dass die erforderliche Wärmeenergie für die Dampfreformierungsreaktionen vom unter d) genannten Mittel durch indirekte Wärmeübertragung auf das Mittel übertragen werden kann,
f) Mittel zur Aufnahme der Reaktionszone der Wassergas-Shift-Reaktion im Synthesegas in dem dafür aktiver Katalysator angeordnet ist, wobei dieses Mittel so gestaltet und angeordnet ist, dass zwischen den Reaktionszonen der Dampfreformierungsreaktionen und der Wassergas-Shift-Reaktion ein indirekter Wärmeaustausch erfolgen kann,
g) dadurch gekennzeichnet, dass es sich bei den Mitteln zur Bereitstellung der für die Dampfreformierung erforderlichen Wärmeenergie und bei den Mitteln zur Aufnahme der Reaktionszone der Dampfreformierungs- und der Wassergas-Shift-Reaktionen jeweils um Mikrokanäle handelt, die parallel zu einander so angeordnet sind, dass über die Kanalwände ein Wärmeaustausch zwischen ihnen möglich ist.

Der erfindungsgemäße Reaktor ermöglicht es, unter Nutzung der Wassergas-Shift-Reaktion, den Kohlenmonoxidgehalt im Synthesegas zu senken, dabei den Wasserstoffgehalt zu erhöhen und die dabei frei werdende Reaktionsenthalpie für die Dampfreformierung auszunutzen.

Als Wassergas-Shift-Reaktion (synonym CO-Shift-Reaktion oder CO-Konvertierung) wird die Reaktion

CO + H₂O = CO₂ + H₂

bezeichnet, bei deren Ablauf von links nach rechts eine Reaktionsenthalpie von 41 kJ/mol frei wird. Durch eine entsprechend hohe Einstellung des Dampfgehalts im Einsatzgas kann die Ablaufrichtung der Reaktion bestimmt werden. Der Ablauf der Wassergas-Shift-Reaktion wird durch einen dafür aktiven Katalysator unterstützt. Der Reaktor ist so gestaltet, dass zwischen den Reaktionszonen der endothermen Reformierungsreaktionen und der exothermen Wassergas-Shift-Reaktion ein Wärmeaustausch möglich ist. Damit wird die Energieeffizienz des Reaktors verbessert.

Gleichzeitig wird der Kohlenmonoxidgehalt und damit gemäß der Reaktion

2 CO = C + CO₂

die Kohlenstoffaktivität im Synthesegas verringert und daraus folgend auch die Gefährdung von Anlagenteilen durch metal-dusting-Korrosion.

Häufig werden Dampfreformierungsreaktoren für Verfahren zur Wasserstoffgewinnung verwendet. Für diese Anwendung bietet der erfindungsgemäße Reaktor zusätzlich den Vorteil, dass der in diesen Verfahren oft verwendete, dem Dampfreformierungsreaktor nachgeschaltete Wassergas-Shift-Reaktor entlastet wird.

Zweckmäßigerweise werden im erfindungsgemäßen Reaktor die Mikrokanäle parallel aneinandergelegt und damit zu einer Ebene, oder Etage, zusammengefasst, d. h. eine ein Heizmedium, wie z.B. ein Rauchgas, führende, oder mit einem Heizmittel, wie z.B. elektrischen Heizstäben ausgestattete, Ebene, auf diese folgt eine Ebene für die Dampfreformierung, dann für die Wassergas-Shift-Reaktion. Dabei verlaufen diese Kanalebenen, soweit es fertigungstechnisch möglich ist, in möglichst geringem Abstand zueinander, sodass zwischen ihnen ein Wärmeaustausch möglich ist.

### Bevorzugte Ausgestaltungen der Erfindung

Bevorzugt sollten diese Kanäle einen hydraulischen Durchmesser von 1 bis 50 mm und besonders bevorzugt von 2 bis 25 mm haben, wobei der hydraulische Durchmesser dem Produkt aus der mit dem Faktor 4 multiplizierten Querschnittsfläche geteilt durch den Querschnittsumfang entspricht.

Durch die Verwendung derartiger Mikrostrukturierter Bauteile ist eine besonders kompakte Bauweise der Reaktoren möglich.

Dabei besteht eine besondere Ausgestaltung darin, dass die Kanäle in einem Block aus geeignetem Material angeordnet sind, der durch ein 3D-Druckverfahren, wie z. B. Lasersintern, hergestellt werden kann.

Eine weitere bevorzugte Ausgestaltung der Erfindung ist dadurch gekennzeichnet, dass der für die Wassergas-Shift-Reaktion vorgesehene Katalysator aus den Elementen AI, Ce, Zr, Fe, Cr, Zn, und/oder Cu ausgewählt ist und dabei in metallischer und/oder oxidischer Form vorliegt. Diese Elemente sind als wirksame Katalysatoren für diese Reaktion bekannt. Als besonders geeignet gilt ein Katalysator der Zusammensetzung CeZrOx.

Die Erfindung betrifft auch ein Verfahren zur Dampfreformierung von kohlenwasserstoffhaltigem Gas zu Synthesegas, bei dem ein erfindungsgemäßer Reaktor eingesetzt wird und welches folgende Schritte umfasst:
- Bereitstellen des kohlenwasserstoffhaltigen Gases und Dampf als Einsatzgase im für das Verfahren geeigneten Zustand,
- Einleiten der Einsatzgase in einen erfindungsgemäßen, betriebsbereiten Reaktor,
- Katalytisches Dampfreformieren des Einsatzgases zu einem Kohlenoxide, Wasserstoff und Wasserdampf enthaltenden Synthesegas,
- katalytische Einstellung des Wassergasgleichgewicht im Synthesegas unter Wärmeaustausch zwischen den Reaktionszonen der Dampfreformierung und der Einstellung des Wassergasgleichgewichts,
- Ausleiten des Synthesegases aus dem Dampfreformierungsreaktor zur weiteren Behandlung außerhalb des Verfahrens.

Eine weitere bevorzugte Ausgestaltung des erfindungsgemäßen Verfahrens ist dadurch gekennzeichnet, dass das Mengenverhältnis von Dampf und kohlenwasserstoffhaltigem Gas im Einsatzgases, d. h. in dem Gas, dass dem Reaktor zugeführt wird, so eingestellt wird, dass bei der Einstellung des Wassergasgleichgewichts der Wasserstoffanteil im Synthesegas erhöht und der Kohlenmonoxidanteil gesenkt wird. Durch den niedrigeren Kohlenmonoxidanteil und damit auch Kohlenstoffanteil im Gas, wird die Gefährdung des Reaktors durch metal-dusting-Korrosion gesenkt. Durch diesen Ablauf der Wassergas-Shift-Reaktion wird außerdem Wärme frei, die für die Dampfreformierungsreaktionen genutzt werden kann.

### Ausführungs- und Zahlenbeispiele

Weiterbildungen, Vorteile und Anwendungsmöglichkeiten der Erfindung ergeben sich auch aus der nachfolgenden Beschreibung von Ausführungs- und Zahlenbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
Fig. 1 eine Längsschnittskizze eines erfindungsgemäßen Reaktors in Mikrostrukturbauweise,
Fig. 2 eine Querschnittskizze eines erfindungsgemäßen Reaktors in Mikrostrukturbauweise.

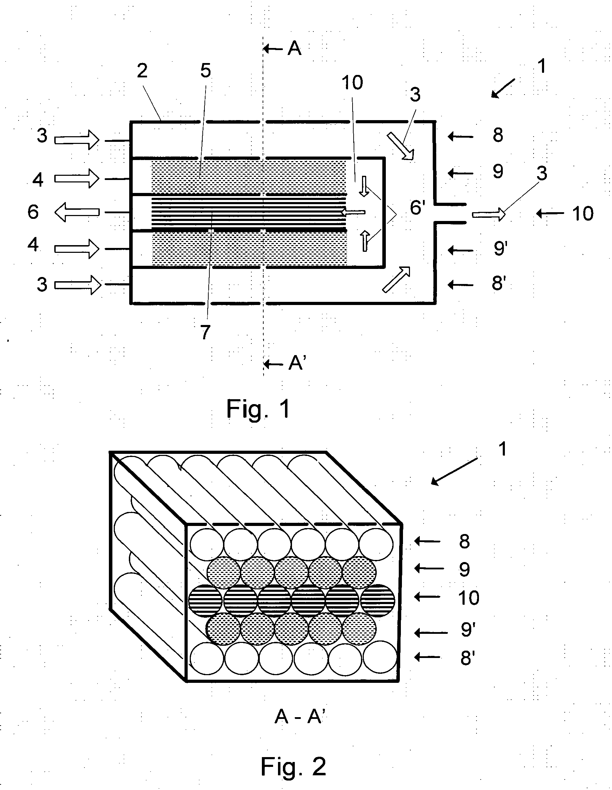

Fig. 1 und Fig. 2 zeigen jeweils eine Längsschnittskizze (Fig. 1) bzw. Querschnittsskizze (Fig. 2) eines erfindungsgemäßen Reaktors in Mikrostrukturbauweise, auch Mikroreaktor genannt, wobei sowohl das Prozess- als auch das Heizgas durch Mikrokanäle geführt wird, die so gebündelt angeordnet sind, dass zwischen ihnen, über ihre Außenflächen ein Wärmeaustausch untereinander erfolgen kann. Die Kanäle in denen das Heizgas fließt, in denen die Reaktionszone für die Dampfreformierungsreaktionen und in denen die Reaktionszone der Wassergas-Shift-Reaktion liegen, sind jeweils zu Ebenen parallel zu einander liegender Kanäle zusammengefasst. Hier sind die Kanäle direkt aneinander liegend dargestellt, es ist aber auch möglich, dass, fertigungstechnisch bedingt, die Kanäle mit einem gewissen Abstand zu einander verlaufen. In den Kanalebenen 8 und 8' fließt Rauchgas 3 durch die Kanäle, in den Kanalebenen 9 und 9' befindet sich jeweils die Reaktionszone der Dampfreformierungsreaktionen, wobei das Einsatzgas 4 in die Kanäle der Ebenen 9 und 9' eingeleitet wird. Das beim Durchströmen dieser Kanäle entstandene Synthesegas 6 wird anschließend über eine Umleitungszone in die Kanäle der Ebene 10 geleitet, in denen sich die Reaktionszone für die Wassergas-Shift-Reaktion befindet.

### Gewerbliche Anwendbarkeit

Mit der Erfindung werden Reaktoren für die Erzeugung von Synthesegas durch Dampfreformierung vorgeschlagen, die eine erhöhte Energieausbeute ermöglichen und ein verringertes Korrosionsrisiko durch metal-dusting aufweisen. Die Erfindung ist daher vorteilhaft gewerblich anwendbar.

### Bezugszeichenliste

- 1: Reaktor, in Mikrostrukturbauweise
- 2: Reaktormantel
- 3: Rauchgas
- 4: Einsatzgas
- 5: Katalysator für Reformierungsreaktionen
- 6: Synthesegas
- 7: Katalysator für die Wassergas-Shift-Reaktion
- 8: Kanalebene für Rauchgas
- 9: Kanalebene für Dampfreformierungsreaktionen
- 10: Kanalebene für Wassergas-Shift-Reaktion

## Patentansprüche

1. Reaktor zur Dampfreformierung von kohlenwasserstoffhaltigem Gas zu Synthesegas, umfassend
a) einen Reaktormantel,
b) Zuführungsrohrleitungen für kohlenwasserstoffhaltiges Gas und für Dampf,
c) Abführungsrohrleitungen für Synthesegas und für Rauchgas, ;
d) Mittel zur Bereitstellung der für die Dampfreformierung erforderlichen Wärmeenergie,
e) Mittel zur Aufnahme der Reaktionszone der Dampfreformierungsreaktionen, wobei in der Reaktionszone ein für die Dampfreformierungsreaktionen aktiver Katalysator angeordnet ist, und wobei das Mittel so gestaltet und relativ zu dem unter d) aufgeführten Mittel angeordnet ist, dass die erforderliche Wärmeenergie für die Dampfreformierungsreaktionen vom unter d) genannten Mittel durch indirekte Wärmeübertragung auf das Mittel übertragen werden kann,
f) Mittel zur Aufnahme der Reaktionszone der Wassergas-Shift-Reaktion im Synthesegas in dem dafür aktiver Katalysator angeordnet ist, wobei dieses Mittel so gestaltet und angeordnet ist, dass zwischen den Reaktionszonen der Dampfreformierungsreaktionen und der Wassergas-Shift-Reaktion ein indirekter Wärmeaustausch erfolgen kann,
g) **dadurch gekennzeichnet, dass** es sich bei den Mitteln zur Bereitstellung der für die Dampfreformierung erforderlichen Wärmeenergie und bei den Mitteln zur Aufnahme der Reaktionszone der Dampfreformierungs- und der Wassergas-Shift-Reaktionen jeweils um Mikrokanäle handelt, die parallel zu einander so angeordnet sind, dass über die Kanalwände ein Wärmeaustausch zwischen ihnen möglich ist.

2. Reaktor gemäß Anspruch 1, **dadurch gekennzeichnet, dass** die Kanäle einen hydraulischen Durchmesser von 1 bis 50 mm haben.

3. Reaktor gemäß Anspruch 1, **dadurch gekennzeichnet, dass** die Kanäle einen hydraulischen Durchmesser von 2 bis 25 mm haben.

4. Reaktor gemäß Anspruch 1, **dadurch gekennzeichnet, dass** die Kanäle in einem Block angeordnet sind, der mittels eines 3D-Druckverfahrens hergestellt wurde.

5. Reaktor gemäß einem der vorhergehenden Ansprüche, **dadurch gekennzeichnet, dass** der für die Wassergasreaktion vorgesehene Katalysator aus mindestens einem der Elemente Al, Ce, Zr, Fe, Cr, Zn, und/oder Cu ausgewählt ist und dabei in metallischer und/oder oxidischer Form vorliegt.

6. Reaktor gemäß Anspruch 5, **dadurch gekennzeichnet, dass** der für die Wassergasreaktion vorgesehene Katalysator CeZrOx umfasst.

7. Verfahren zur Dampfreformierung von kohlenwasserstoffhaltigem Gas zu Synthesegas, umfassend folgende Schritte:
a) Bereitstellen des kohlenwasserstoffhaltigen Gases und Dampf als Einsatzgase mit für die Dampfreformierung geeigneter Zusammensetzung, Temperatur und Druck,
b) Einleiten der Einsatzgase in einen Reaktor gemäß den Ansprüchen 1 bis 6, der sich in betriebsbereitem Zustand befindet,
c) Katalytisches Dampfreformieren des Einsatzgases zu einem Kohlenoxide, Wasserstoff und Wasserdampf enthaltenden Synthesegas,
d) Ausleiten des Synthesegases aus dem Dampfreformierungsreaktor, **dadurch gekennzeichnet, dass** zwischen den Schritten c) und d) in einem Schritt c*) das Wassergasgleichgewicht im Synthesegas katalytisch eingestellt wird.

8. Verfahren gemäß Anspruch 7, **dadurch gekennzeichnet, dass** das Mengenverhältnis von Dampf und kohlenwasserstoffhaltigem Gas im Einsatzgas so eingestellt wird, dass in Schritt c*) der Wasserstoffanteil im Synthesegas erhöht und der Kohlenmonoxidanteil gesenkt wird.

## Claims

1. Reactor for steam reforming of hydrocarbon-containing gas to synthesis gas, comprising
a) a reactor shell,
b) supply pipelines for hydrocarbon-containing gas and for steam,
c) discharge pipelines for synthesis gas and for flue gas,
d) means for providing the thermal energy required for steam reforming,
e) means for accommodating the reaction zone of the steam reforming reactions, wherein a catalyst active for the steam reforming reactions is arranged in the reaction zone, and wherein the means is configured and arranged relative to the means designated d) such that the thermal energy required for the steam reforming reactions can be transferred from the means designated d) to the means by indirect heat transfer,
f) means for accommodating the reaction zone of the water-gas shift reaction in the synthesis gas, in which the catalyst active therefor is arranged, said means being so configured and arranged that an indirect heat exchange can take place between the reaction zones of the steam reforming reactions and the water-gas shift reaction,
g) **characterised in that** the means for providing the thermal energy required for steam reforming and the means for accommodating the reaction zone of the steam reforming and water gas-shift reactions are each microchannels arranged parallel to one another in such a way that heat exchange between them is possible via the channel walls.

2. Reactor according to claim 1, **characterised in that** the channels have a hydraulic diameter of 1 to 50 mm.

3. Reactor according to claim 1, **characterised in that** the channels have a hydraulic diameter of 2 to 25 mm.

4. Reactor according to claim 1, **characterised in that** the channels are arranged in a block produced by a 3D printing process.

5. Reactor according to any one of the preceding claims, **characterised in that** the catalyst for the water gas reaction is selected from at least one of the elements Al, Ce, Zr, Fe, Cr, Zn, and/or Cu and is present in metallic and/or oxidic form.

6. Reactor according to claim 5, **characterised in that** the catalyst for the water gas reaction comprises CeZrO_{X}.

7. Method for steam reforming of hydrocarbon-containing gas to synthesis gas, comprising the following steps:
a) providing the hydrocarbon-containing gas and steam as feed gases with composition, temperature and pressure suitable for steam reforming,
b) introducing the feed gases into a reactor according to claims 1 to 6 which is in an operational state,
c) catalytic steam reforming of the feed gas to a synthesis gas containing carbon oxides, hydrogen and steam,
d) discharging the synthesis gas from the steam reforming reactor, **characterised in that**, between steps c) and d), in a step c*) the water gas equilibrium in the synthesis gas is catalytically adjusted.

8. Method according to claim 7, **characterised in that** the quantitative ratio of steam and hydrocarbon-containing gas in the feed gas is adjusted such that in step c*) the hydrogen content in the synthesis gas is increased and the carbon monoxide content is reduced.

## Revendications

1. Réacteur destiné au vaporeformage de gaz contenant des hydrocarbures en gaz de synthèse, comprenant
a) un manteau de réacteur,
b) des conduits tubulaires d'alimentation pour des gaz contenant des hydrocarbures et pour de la vapeur,
c) des conduits tubulaires d'évacuation pour du gaz de synthèse et pour du gaz de combustion,
d) un moyen destiné à fournir l'énergie calorifique requise pour le vaporeformage,
e) un moyen destiné au le logement de la zone de réaction des réactions de vaporeformage, dans lequel un catalyseur actif pour les réactions de vaporeformage est disposé dans la zone de réaction, et dans lequel le moyen est configuré et disposé relativement par rapport au moyen indiqué en d) de sorte que l'énergie calorifique requise peut être transférée pour les réactions de vaporeformage du moyen mentionné en d) au moyen par transfert indirect de chaleur,
f) un moyen destiné au logement de la zone de réaction de la réaction de conversion de gaz à l'eau en le gaz de synthèse, dans lequel est disposé du catalyseur actif à cette fin, dans lequel ce moyen est configuré et disposé de sorte qu'un échange indirect de chaleur peut s'effectuer entre les zones de réaction des réactions de vaporeformage et la réaction de conversion de gaz à l'eau,
g) **caractérisé en ce que** pour ce qui est des moyens destinés à fournir l'énergie calorifique requise pour le vaporeformage et pour ce qui est des moyens destinés à l'admission de la zone de réaction des réactions de vaporeformage et des réactions de conversion de gaz à l'eau, il s'agit respectivement de microcanaux qui sont disposés parallèlement les uns aux autres, de sorte qu'un échange de chaleur entre eux est possible via les parois des canaux.

2. Réacteur selon la revendication 1, **caractérisé en ce que** les canaux présentent un diamètre hydraulique de 1 à 50 mm.

3. Réacteur selon la revendication 1, **caractérisé en ce que** les canaux présentent un diamètre hydraulique de 2 à 25 mm.

4. Réacteur selon la revendication 1, **caractérisé en ce que** les canaux sont disposés dans un bloc qui a été fabriqué au moyen d'un procédé d'impression 3D.

5. Réacteur selon l'une quelconque des revendications précédentes, **caractérisé en ce que** le catalyseur prévu pour la réaction du gaz à l'eau est choisi parmi au moins l'un des éléments Al, Ce, Zr, Fe, Cr, Zn, et/ou Cu et est en ce cas présent sous forme métallique et/ou de type oxyde.

6. Réacteur selon la revendication 5, **caractérisé en ce que** le catalyseur prévu pour la réaction du gaz à l'eau comprend du CeZrOₓ.

7. Procédé destiné au vaporeformage de gaz contenant des hydrocarbures en gaz de synthèse, comprenant les étapes suivantes :
a) fourniture du gaz contenant des hydrocarbures et de vapeur en tant que gaz de charge à composition, température et pression appropriées pour le vaporeformage,
b) introduction du gaz de charge dans un réacteur selon les revendications 1 à 6, qui se trouve en état prêt à fonctionner,
c) vaporeformage catalytique du gaz de charge en un gaz de synthèse contenant des oxydes de carbone, de l'hydrogène et de la vapeur d'eau,
d) évacuation du gaz de synthèse hors du réacteur de vaporeformage, **caractérisé en ce qu'**entre les étapes c) et d) dans une étape c*) on établit par voie catalytique l'équilibre du gaz à l'eau dans le gaz de synthèse.

8. Procédé selon la revendication 7, **caractérisé en ce qu'**on ajuste la proportion de vapeur et de gaz contenant des hydrocarbures dans le gaz de charge de manière que dans l'étape c*) la part d'hydrogène dans le gaz de synthèse soit augmentée et la partie monoxyde de carbone soit diminuée.
